# EUROPÄISCHE PATENTSCHRIFT

(11) **EP 2 154 367 B1**
(45) Veröffentlichungstag und Bekanntmachung des Hinweises auf die Patenterteilung: **02.05.2012**
(21) Anmeldenummer: 09008357.7
(22) Anmeldetag: 26.06.2009
(51) Int. Cl.: F03D 11/02, F16D 1/076

(54) **Verfahren zur Montage einer Rotornabe an einer Rotorwelle einer Windenergieanlage und Windenergieanlage**
Method of assembling a rotor hub on a rotor shaft for a wind energy system and wind energy system
Procédé de montage d'un moyeu d'hélice sur un arbre de rotor d'une éolienne et éolienne

(30) Priorität: 02.08.2008 DE 102008036230
(43) Veröffentlichungstag der Anmeldung: 17.02.2010
(73) Patentinhaber: Nordex Energy GmbH, 22848 Norderstedt (DE)
(72) Erfinder: Nitzpon, Joachim, 18209 Steffenshagen (DE)
(74) Vertreter: Hauck Patent- und Rechtsanwälte

(56) Entgegenhaltungen:
- WO-A-2008/092448
- DE-A1- 10 351 524

## Beschreibung

Die vorliegende Erfindung betrifft ein Verfahren zur Montage einer Rotornabe an einer Rotorwelle einer Windenergieanlage. Die Erfindung betrifft außerdem eine Windenergieanlage. Bei der Errichtung von Windenergieanlagen muss die Rotornabe an der zusammen mit dem Maschinenhaus der Anlage auf dem Anlagenturm montierten Rotorwelle befestigt werden. Dazu wird die Rotornabe mit oder ohne montierte Rotorblätter beispielsweise mittels eines Krans in eine Montageposition zu der Rotorwelle gebracht. Aus Gründen der Arbeitssicherheit darf die an dem Kran hängende Rotornabe vor ihrer Befestigung an der Rotorwelle nicht von Personal betreten werden. Eine Befestigung der Nabe von dem Nabeninnenraum her ist daher nicht möglich. Dies führt zu Schwierigkeiten insbesondere bei zylindrischen Rotorwellen ohne einen ausgeprägten Flansch zur Befestigung der Nabe.

Aus DE 103 51 524 A1 ist eine Rotorlagerung für eine Windenergieanlage bekannt, bei der gemäß einer Ausgestaltung die Rotornabe mit einem in einen Lagerinnenring des Rotorlagers eingepassten, das Triebstranggetriebe teilweise umgebenden Versteifungsring sowie einer zwischen dem Versteifungsring und der Nabe angeordneten Arretierscheibe verschraubt wird. Mit dieser die endgültige Befestigung der Nabe bildenden Verschraubung soll eine Montage der Nabe aus der Gondel heraus möglich sein. Allerdings ist die Konstruktion mit einem zusätzlichen Versteifungsring aufwendig. Außerdem ist diese Ausgestaltung nicht geeignet für eine Befestigung der Rotornabe an zylindrischen Rotorwellen, insbesondere ohne einen ausgeprägten Flansch zur Befestigung der Nabe. Herkömmliche Lösungen, bei denen die Rotornabe erst mit dem Maschinenträger oder Rotorlagergehäuse verschraubt wird, machen eine aufwendige genaue Ausrichtung der Rotomabenlochbilder mit einem entsprechenden Lochbild im Maschinenträger bzw. Rotorlagergehäuse erforderlich. Dies ist nur sicher durch ein aufwendiges Drehen der Nabe kurz vor der Montage über die Anschlagmittel oder Lastaufnahmemittel realisierbar.

Ausgehend von dem erläuterten Stand der Technik liegt der Erfindung daher die Aufgabe zugrunde, ein Verfahren sowie eine Windenergieanlage der eingangs genannten Art bereitzustellen, wobei die Montage der Rotornabe in einfacher und sicherer Weise ermöglicht wird.

Diese Aufgabe wird gemäß der Erfindung durch die Gegenstände der Ansprüche 1 und 8 gelöst. Vorteilhafte Ausgestaltungen finden sich in den abhängigen Ansprüchen sowie der Beschreibung und den Figuren.

Für ein Verfahren zur Montage einer Rotornabe an einer Rotorwelle einer Windenergieanlage löst die Erfindung die Aufgabe, indem nacheinander folgende Schritte ausgeführt werden:
- an dem der Rotornabe zugewandten Ende der Rotorwelle wird eine Arretierscheibe an der Rotorwelle befestigt, die eine Vielzahl von Bohrungen zur vorläufigen Befestigung der Rotornabe aufweist,
- die Rotornabe wird zur Montage in Anlage mit der Arretierscheibe gebracht,
- sofern erforderlich, werden die Bohrungen in der Arretierscheibe durch Verdrehen der Rotorwelle und/oder der Rotornabe in Überlappung mit entsprechenden Bohrungen in der Rotornabe gebracht,
- die Rotornabe wird durch die Bohrungen der Arretierscheibe und der Rotornabe von der Rotorwellenseite her vorläufig mit der Arretierscheibe verschraubt, und
- die Rotornabe wird von dem Rotornabeninnenraum her endgültig mit der Arretierscheibe und der Rotorwelle verschraubt. Für eine Windenergieanlage mit einer Rotorwelle und einer an der Rotorwelle befestigten Rotornabe löst die Erfindung die Aufgabe entsprechend dadurch,
- dass zwischen der Rotorwelle und der Rotornabe eine Arretierscheibe mit einer Vielzahl von Bohrungen zur vorläufigen Befestigung der Rotornabe angeordnet ist,
- dass die Arretierscheibe mit der Rotornabe von der Rotorwellenseite her durch die Bohrungen der Arretierscheibe und entsprechende Bohrungen der Rotornabe verschraubt ist, und
- dass die Rotornabe außerdem von dem Rotornabeninnenraum her mit der Arretierscheibe und der Rotorwelle endgültig verschraubt ist.

Die Arretierscheibe kann in an sich bekannter Weise mindestens eine Bohrung aufweisen, in die ein Arretierbolzen eingeführt werden kann, um die Rotorwelle gegen Drehbewegungen zu arretieren, beispielsweise für eine Wartung. Auch kann die Rotorwelle während der Montage der Rotornabe gegen Verdrehen gesichert sein. Die Rotorwelle kann eine zylindrische Rotorwelle sein. Sie kann ein Gussteil sein, beispielsweise aus Sphäroguss. Die Rotorwelle kann ohne einen Flansch zur Befestigung der Rotornabe ausgebildet sein. Die Bohrungen, insbesondere die Bohrungen in der Nabe, können dabei selbstverständlich auch Gewindebohrungen sein.

Mit vorläufiger Befestigung ist in dem vorliegenden Zusammenhang der Zeitraum gemeint, bis die Rotornabe durch die endgültige Verschraubung aus dem Nabeninnenraum auch direkt mit der Rotorwelle verschraubt ist. Die vorläufige Verschraubung kann insbesondere verbleibend sein, also zusammen mit der endgültigen Verschraubung die Befestigung der Rotornabe im Betrieb der Anlage bilden. Insbesondere kann die Verbindung durch die vorläufige Verschraubung auch so ausgelegt sein, dass auch die maximalen Momente (insgesamt oder teilweise) beim Arretieren über die vorläufige Schraubenverbindung direkt von der Rotornabe in die Arretierscheibe und über den Arretierbolzen in das Lagergehäuse oder den Maschinenträger übertragen werden können. Grundsätzlich wäre es jedoch auch denkbar, die vorläufige Verschraubung nach der endgültigen Verschraubung wieder zu lösen.

Erfindungsgemäß wird bei der Montage des gesamten Rotors oder der Rotornabe im Zuge der Errichtung der Anlage die Rotornabe beispielsweise mittels eines Krans in eine Montageposition zu der Welle gebracht. An der Welle ist zu diesem Zeitpunkt die Arretierscheibe bereits befestigt. Vorzugsweise durch ein Drehen des Triebstrangs und damit der Rotorwelle, gegebenenfalls jedoch auch durch ein Drehen der Nabe, können dann in besonders einfacher Weise die für die vorläufige Verschraubung vorgesehenen Schraubenkreise der Nabe und der Arretierscheibe in Deckung miteinander gebracht werden.

Nach dem Anordnen der Nabe in der Montageposition erfolgt erfindungsgemäß die vorläufige Verbindung der Nabe mit der gelagerten Rotorwelle über eine Verschraubung der Nabe mit der Arretierscheibe von dem Maschinenhaus der Windenergieanlage heraus. Somit wird eine sichere Montage der beispielsweise an einem Kran hängenden Rotornabe ermöglicht. Die vorläufige Verschraubung verbindet dabei insbesondere nur die Arretierscheibe und die Nabe. Sie dient als verbleibende Montageverbindung, damit die Nabe für die endgültige Verschraubung von der Nabeninnenseite her durch Personal betreten werden kann. Als zweiter Schritt erfolgt aus der vorläufig befestigten und damit betretbaren Rotornabe heraus in sicherer Weise die endgültige Verschraubung der Nabe an der Rotorwelle und der Arretierscheibe. Die endgültige Verschraubung verbindet insbesondere nur die Rotornabe, Arretierscheibe und Rotorwelle. Sie stellt die im Betrieb der Anlage erforderliche Befestigungssicherheit der Nabe an der Welle sicher.

Durch die Erfindung wird die Verschraubung der Rotornabe mit der Rotorwelle über die Arretierscheibe ermöglicht, ohne die Nabe vor einer ersten Befestigung an der Rotorwelle betreten zu müssen. Gerade bei zylindrischen Rotorwellen bzw. Rotorwellen ohne ausgeprägten Befestigungsflansch ist es erforderlich, die endgültige Schraubenverbindung zwischen Rotornabe und Rotorwelle aus der Rotornabe heraus vorzunehmen. Erfindungsgemäß wird dies aufgrund der vorläufigen Verbindung in sicherer Weise ermöglicht. Die Arbeitssicherheitsanforderungen werden jederzeit eingehalten. Sämtliche während der Montagezeit auftretenden Windlasten werden sicher über die gegen Verdrehen gesicherte Rotorwelle in das Lagergehäuse und/oder den Maschinenträgerabgeleitet. Dabei zeichnet sich die Windenergieanlage gemäß der Erfindung durch eine kompakte und sichere Verbindung der Nabe mit der Welle aus.

Gemäß einer bevorzugten Ausgestaltung kann die Arretierscheibe mittels Hohlschrauben mit der Rotorwelle verschraubt sein. Die Hohlschrauben haben ein Außengewinde zum Einschrauben in entsprechende Gewinde in der Rotorwelle. Zum Verschrauben können die Hohlschrauben beispielsweise einen Innensechskant aufweisen. Die Verschraubung der Arretierscheibe erfolgt dabei von der der Rotorwelle abgewandten Seite der Arretierscheibe her. Bei der Verwendung von Hohlschrauben kann in weiter bevorzugter Weise das endgültige Verschrauben der Rotornabe mit der Arretierscheibe und der Rotorwelle mit durch die Hohlschrauben gesteckten und in entsprechende Gewinde der Rotorwelle eingeschraubten Stiftschrauben erfolgen. Auf diese Weise ist also für die Befestigung der Arretierscheibe an der Rotorwelle und die anschließende endgültige Verschraubung der Rotornabe mit der Arretierscheibe und der Rotorwelle nur ein Schraubenkreis erforderlich. Selbstverständlich können anstelle der Stiftschrauben auch beliebige andere Schrauben, beispielsweise Sechskantschrauben, verwendet werden.

Bei Verwendung von Hohlschrauben ist es auch möglich, dass diese ein Innengewinde aufweisen, und dass das endgültige Verschrauben der Rotornabe mit der Arretierscheibe und der Rotorwelle durch in das Innengewinde der Hohlschrauben geschraubte Stiftschrauben erfolgt. Die Stiftschrauben können dann ausschließlich in den Hohlschrauben verschraubt sein. Über die für das Einschrauben der Hohlschrauben in der Rotorwelle vorgesehenen Gewindebohrungen hinaus müssen für die endgültige Verschraubung also keine zusätzlichen Gewindebohrungen in der Rotorwelle vorgesehen sein. Die Rotornabe wird lediglich durch das Einschrauben der Stiftschrauben in die Hohlschrauben gesichert. Bei Gussbauteilen, wie Rotorwellen, kann aufgrund der geringeren Festigkeit die Belastung von Innengewinden begrenzt sein. Um die Festigkeit im Gewinde zu erhöhen, werden z.T. sogenannte Helicoil-Einsätze verwendet, die den wirksamen Gewindedurchmesser vergrößern und damit die Belastbarkeit des Gewindes im Gussbauteil erhöhen. Eine Hohlschraube mit Außen- und Innengewinde übernimmt diese Funktionalität. Mit dieser Ausgestaltung wird also die Tragfähigkeit des Gewindes in der Rotorwelle erhöht und es wird eine besonders sichere Verbindung erreicht. Wiederum können anstelle der Stiftschrauben auch andere Schrauben, beispielsweise Sechskantschrauben, verwendet werden.

Eine besonders einfache und kompakte vorläufige Verbindung der Arretierscheibe mit der Rotornabe ergibt sich, wenn die Arretierscheibe in ihrem Außenbereich einen Befestigungsflansch zur Befestigung mit einem entsprechenden Flansch der Rotornabe aufweist. Die Rotornabe kann also einen entsprechenden Flansch besitzen. Die Befestigungsflansche können jeweils eine ebene Anlagefläche aufweisen. Zur Befestigung wird der Befestigungsflansch der Arretierscheibe mit seiner ebenen Anlagefläche in Anlage mit der entsprechenden ebenen Anlagefläche des Befestigungsflansches der Rotornabe gebracht. Es ist möglich, die Bohrungen der Arretierscheibe zur vorläufigen Befestigung der Rotornabe in dem Befestigungsflansch anzuordnen. In diesem Fall weist die Arretierscheibe also einen außen liegenden Schrauben(teil-)kreis auf, über den die vorläufige Verschraubung der Rotornabe erfolgt.

Gemäß einer diesbezüglichen Fortbildung kann der Befestigungsflansch über Aussteifungsrippen mit einem konzentrisch zu dem Befestigungsflansch vorgesehenen inneren Befestigungsflansch mit einer Vielzahl von Bohrungen zum endgültigen Verschrauben der Rotornabe mit der Arretierscheibe und der Rotorwelle verbunden sein. Der innere Befestigungsflansch weist ebenfalls eine ebene Anlagefläche auf, mit der er zur Montage in Anlage mit einer entsprechenden ebenen Anlagefläche der Rotornabe gebracht wird. Die Rotornabe kann ebenfalls entsprechende Versteifungsrippen zur Verbindung ihres Befestigungsflansches mit dem übrigen Teil der Nabe aufweisen. Die Aussteifungsrippen können in einer Ebene mit der Anlagefläche des jeweiligen Befestigungsflansches abschließen oder gegenüber dieser Anlagefläche zurück versetzt abschließen. Durch den großflächigen ebenen Montagestoß zwischen Rotornabe und Arretierscheibe zur vorläufigen Befestigung in Verbindung mit Aussteifungsrippen in der Arretierscheibe und/oder Flanschfläche der Rotornabe ergibt sich einerseits eine besonders dünnwandige, also Material sparende und damit leichte und kostengünstige Konstruktion. Andererseits bilden die speziell ausgebildeten Flanschbereiche der Arretierscheibe und gegebenenfalls der Rotornabe nach dem Verspannen der außen liegenden vorläufigen Verschraubung sowie der innen liegenden Verschraubung zwischen Rotornabe, Arretierscheibe und Rotorwelle ein Hohlprofil mit Aussteifungsrippen. Das Hohlprofil entsteht durch die Verschraubung von zwei Halbschalen über einen außen und einen innen liegenden Teilkreis und bildet mit geringer Wandstärke eine steife, stirnseitig der Rotornabe angeordnete Anschlusskonstruktion. Durch dieses umlaufende Hohlprofil wird eine besonders steife Anbindung erreicht.

Die erfindungsgemäße Windenergieanlage kann insbesondere mit dem erfindungsgemäßen Verfahren montiert sein.

Ein Ausführungsbeispiel der Erfindung wird nachfolgend anhand einer Zeichnung näher erläutert. Es zeigen schematisch:
- Fig. 1: einen Ausschnitt einer erfindungsgemäßen Montageverbindung zwi- schen der Rotornabe und der Rotorwelle einer Windenergieanlage in einem Querschnitt,
- Fig. 2: einen vergrößerten Ausschnitt der Darstellung aus Figur 1,
- Fig. 3: einen weiteren Ausschnitt einer erfindungsgemäßen Montageverbin- dung zwischen der Rotornabe und Rotorwelle in einem Querschnitt,
- Fig. 4: eine Schnittdarstellung entlang der Linie A - A aus Fig. 3 in einem Ausschnitt, und
- Fig. 5: einen vergrößerten Ausschnitt einer erfindungsgemäßen Montage- verbindung zwischen der Rotornabe und der Rotorwelle gemäß einem weiteren Ausführungsbeispiel in einem Querschnitt.

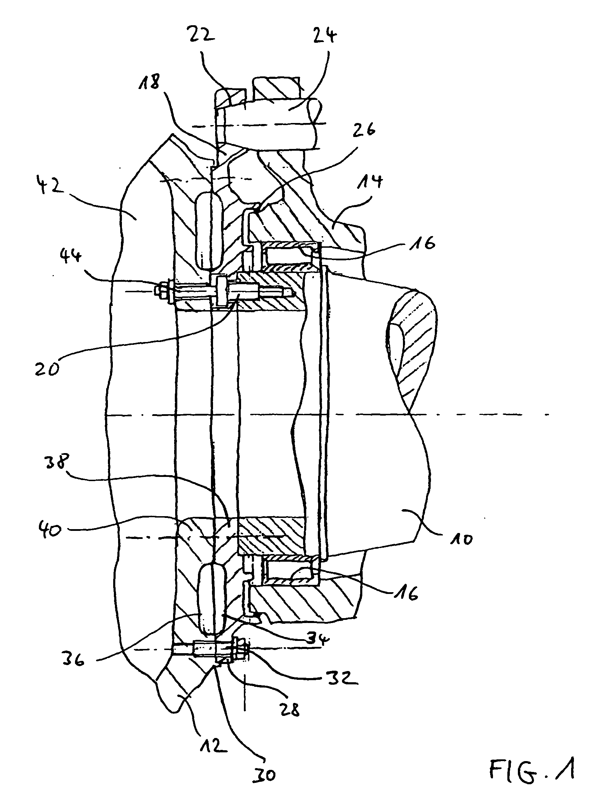

Soweit nichts anderes bestimmt ist, bezeichnen in den Figuren gleiche Bezugszeichen gleiche Gegenstände. In Figur 1 ist eine erfindungsgemäße Montageverbindung zwischen einer im Bereich des Anschlusses zur Rotornabe zylindrischen Rotorwelle 10 aus Sphäroguss und einer Rotornabe 12 dargestellt. Die Rotorwelle 10 ist in einem Rotorlagergehäuse 14 über eine Rotorlagerung 16, vorliegend ein Loslager 16, drehbar gelagert. Eine Arretierscheibe 18 ist mit der Rotorwelle 10 mittels einer Vielzahl Hohlschrauben 20 verschraubt. Die Hohlschrauben 20, von denen in Figur 1 aus Gründen der Übersichtlichkeit nur die in der oberen Hälfte der Figur vorgesehenen Schrauben 20 dargestellt sind, verfügen über ein Außengewinde, mit dem sie in ein entsprechendes Gewinde der Rotorwelle 10 eingreifen. Die Arretierscheibe 18 verfügt weiterhin über eine Bohrung 22, in die zur Arretierung der Arretierscheibe 18 und damit der Rotorwelle 10 und der Rotornabe 12 ein Arretierbolzen 24 eingeführt werden kann. Zwischen der Arretierscheibe 18 und dem Rotorlagergehäuse 14 ist ein Dichtsystem 26 für das Rotorlager vorgesehen.

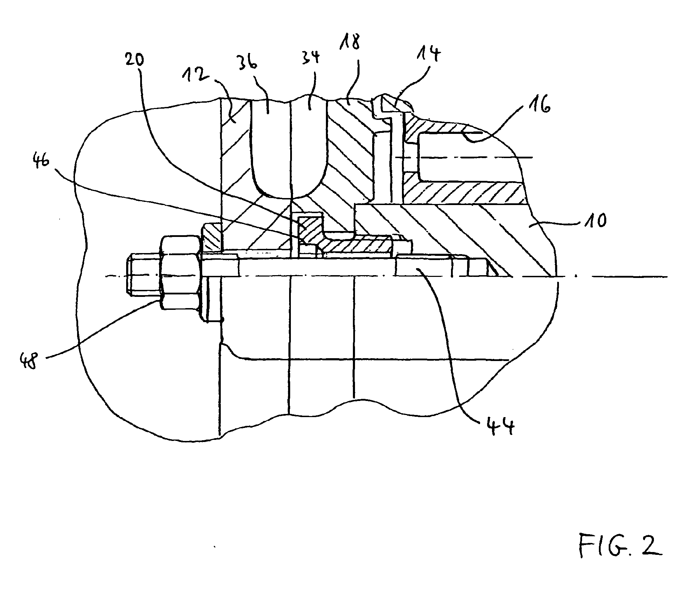

Die Arretierscheibe 18 verfügt in ihrem Außenbereich über einen Befestigungsflansch 28. Die Rotornabe 12 besitzt einen korrespondierenden Flansch 30. Die Flansche 28, 30 weisen jeweils eine ebene Anlagefläche auf, mit denen Sie für die Montage miteinander in Anlage gebracht werden. Für eine leichtere Montage können die beiden Befestigungsflansche 28, 30 über einen Rezess im Flanschbereich zentriert werden. Eine Zentrierung ist jedoch auch anderweitig möglich, beispielsweise über zur Verschraubung genutzte Stiftschrauben. Die in Anlage befindlichen Befestigungsflansche 28, 30 der Arretierscheibe 18 sowie der Rotornabe 12 sind jeweils über Aussteifungsrippen 34, 36 mit konzentrisch zu den Befestigungsflanschen 28, 30 vorgesehenen inneren Befestigungsflanschen 38, 40 verbunden. Die inneren Befestigungsflansche 38, 40 besitzen ebenfalls jeweils eine ebene Anlagefläche, mit denen sie miteinander in Anlage gebracht werden. Auf diese Weise wird eine besonders leichte, dünnwandige und gleichzeitig steife Anschlusskonstruktion erreicht. In den Befestigungsflanschen 28, 30 sind eine Vielzahl Bohrungen vorgesehen, von denen in Figur 1 der Übersichtlichkeit halber nur die in der unteren Hälfte der Figur vorgesehenen Bohrungen dargestellt sind. Mittels aus dem Maschinenhaus der Windenergieanlage (nicht dargestellt) durch diese Bohrungen geführter Stiftschrauben 32 ist die Rotornabe 12 vorläufig mit der Arretierscheibe 18 verschraubt und damit mit der Rotorwelle 10 verbunden. In den inneren Befestigungsflanschen 38, 40 ist eine Vielzahl Bohrungen vorgesehen, von denen wiederum der Übersichtlichkeit halber nur die in der oberen Hälfte in Figur 1 vorgesehenen Bohrungen gezeigt sind. Mittels von dem Rotornabeninnenraum 42 her durch die Hohlschrauben 20 durchgesteckter Stiftschrauben 44 ist die Rotornabe 12 endgültig mit der Arretierscheibe 18 und der Rotorwelle 10 verschraubt. Diese Verschraubung ist in Figur 2 vergrößert dargestellt. Die Stiftschrauben 44 werden durch die Hohlschrauben 20 gesteckt und in entsprechende Gewindebohrungen in der Rotorwelle 10 geschraubt. Die Stiftschrauben 32 können auch vorab in die Rotornabe 12 geschraubt werden und bei der Montage in die Bohrungen der Arretierscheibe 18 eingefädelt werden. Über Muttern kann die Verbindung vorgespannt werden. Grundsätzlich können die Schrauben 32 beliebig ausgestaltet sein, beispielsweise als Sechskantschrauben oder als Stiftschrauben mit Mutter ausgeführt werden, wie dies in den Figuren dargestellt ist. Das gleiche gilt für die Schrauben 44 zur endgültigen Verschraubung.

Bei Arretierung mittels des Arretierbolzens 24 in der Arretierscheibe 18 können die Drehmomente aus der Rotornabe 12 über die Schraubenverbindung 32, die Arretierscheibe 18 und den Arretierbolzen 24 in das Lagergehäuse bzw. den Maschinenträger abgeleitet werden.

Zur Montage der in den Figuren 1 und 2 dargestellten Verbindung wird zunächst die Arretierscheibe 18 mittels der Hohlschrauben 20 an dem der Rotornabe zugewandten Ende der Rotorwelle 10 verschraubt. Dazu werden die durch die Arretierscheibe 18 gesteckten Hohlschrauben 20 über einen Innensechskant 46 mit ihrem Außengewinde in ein entsprechendes Gewinde in der Rotorwelle 10 eingeschraubt. Anschließend wird die Rotornabe 12 beispielsweise mittels eines Montagekrans zur Montage in Anlage mit Arretierscheibe 18 gebracht. Durch ein Drehen der Getriebeabtriebswelle und damit der Rotorwelle 10 können die in der Arretierscheibe 18 vorgesehenen Bohrungen mit den entsprechenden Bohrungen in der Rotornabe 12 in Deckung gebracht werden. Danach wird mit den durch die Befestigungsflansche 28, 30 der Arretierscheibe 18 bzw. der Rotornabe 12 geführten Stiftschrauben 32 aus dem Maschinenhaus der Anlage heraus, also von der Rotorwellenseite her, die Rotornabe 12 vorläufig mit der Arretierscheibe 18 verschraubt. Diese Verschraubung ist insbesondere in Verbindung mit der Ausgestaltung mit Aussteifungsrippen im Betrieb der Anlage verbleibend. Der Innenraum 42 der Rotornabe 12 kann nun von Personal betreten werden. Von diesem Personal kann anschließend die Rotornabe 12 endgültig mit der Arretierscheibe 18 und der Rotorwelle 10 verschraubt werden. Dazu werden die Stiftschrauben 44 durch die Hohlschrauben 20 hindurch gesteckt und in ein entsprechendes Gewinde in der Rotorwelle 10 geschraubt. Auf die Stiftschrauben 44 werden Muttern 48 zum Vorspannen aufgeschraubt. Die Stiftschrauben können auch vor der Montage der Rotornabe in die Rotorwelle eingeschraubt werden und dann zur Zentrierung genutzt werden. Die für die Schrauben 20, 32 bzw. 44 vorgesehenen Verschraubungen erfolgen dabei jeweils entlang eines Schraubenkreises.

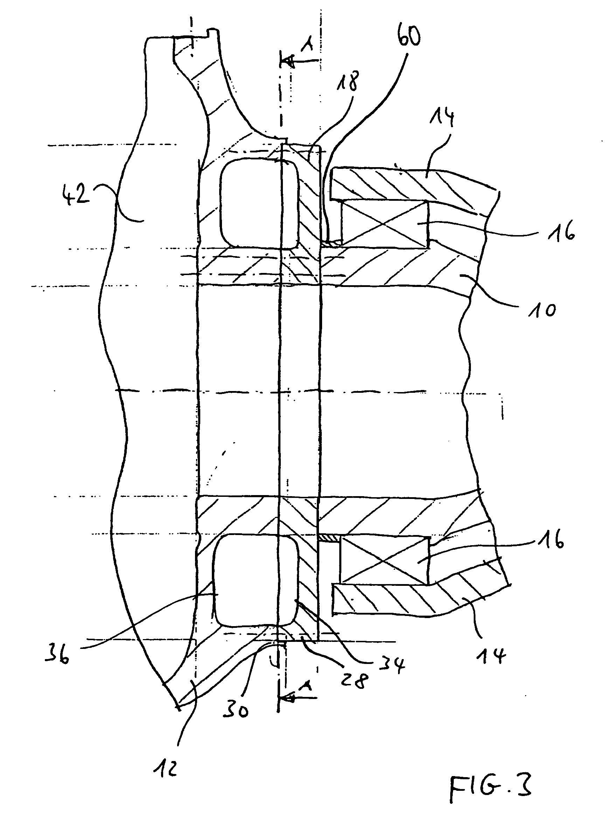

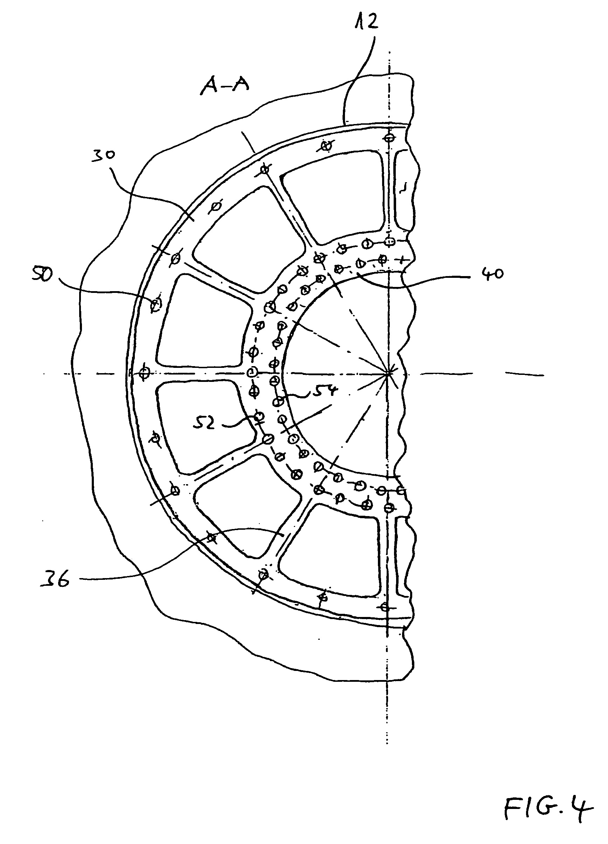

In Figur 3 ist eine weitere erfindungsgemäße Montageverbindung dargestellt, die hinsichtlich ihres Aufbaus und ihrer Montage im Wesentlichen der in den Figuren 1 und 2 dargestellten Verbindung entspricht. Die Verschraubungen sind in Figur 3 aus Gründen der Übersichtlichkeit nicht im Detail dargestellt. Figur 4 stellt einen Schnitt entlang der Linie A - A aus Figur 3 dar und zeigt die erfindungsgemäße Rotornabe 12. Zu erkennen ist der im Außenbereich vorgesehene Befestigungsflansch 30 mit entlang eines Kreises vorgesehenen Bohrungen 50 für die vorläufige Verschraubung der Nabe 12 mit der Arretierscheibe 18. Weiterhin ist in Figur 4 der konzentrisch zu dem Befestigungsflansch 30 vorgesehene innere Befestigungsflansch 40 zu sehen. Der innere Befestigungsflansch 40 weist ebenfalls eine Vielzahl von Bohrungen 52, 54 auf, die in dem dargestellten Beispiel entlang zweier koaxial angeordneter Schraubenkreise ausgeformt sind. Durch mehrere Schraubenkreise können höhere Biege- und Torsionsmomente übertragen werden. Damit die Schraubenkreise möglichst eng angeordnet werden können, um die Wandstärke der Rotorwelle so gering wie möglich zu halten, werden die Bohrungen versetzt angeordnet. Die Arretierscheibe 18 besitzt zu den Bohrungen 50, 52, 54 der Rotornabe 12 korrespondierende Bohrungen. Der innere Befestigungsflansch 40 ist mit dem äußeren Befestigungsflansch 30 über eine Mehrzahl von Aussteifungsrippen 36 verbunden.

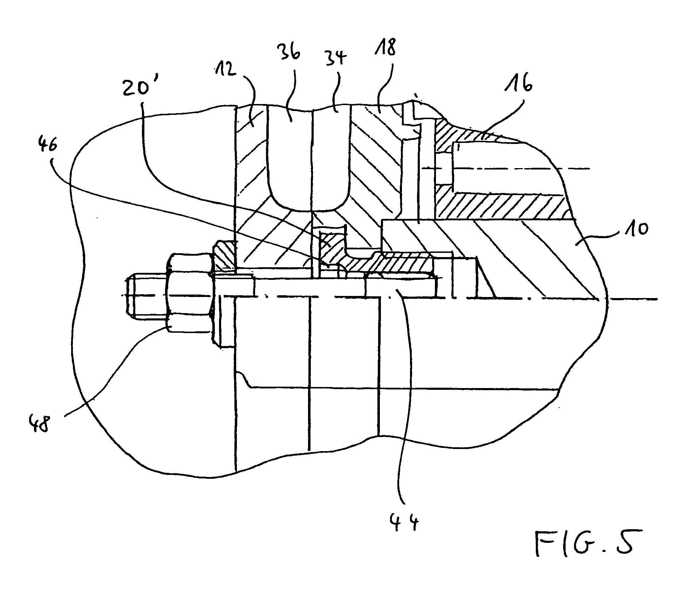

Figur 5 zeigt die in Figur 2 dargestellte endgültige Verschraubung der Rotornabe 12 mit der Rotorwelle 10 über die Arretierscheibe 18 gemäß einer alternativen Ausführungsform. Bei diesem Beispiel verfügen die Hohlschrauben 20' neben ihrem Außengewinde zum Einschrauben in die Rotorwelle 10 weiterhin über ein Innengewinde. Die Stiftschrauben 44 zur endgültigen Verschraubung der Rotornabe 12 an der Welle 10 werden bei diesem Beispiel lediglich in das Innengewinde der Hohlschrauben 20' eingeschraubt. Auf diese Weise wird ein besonders belastbares Gewinde in der als Gussteil ausgebildeten Rotorwelle 10 erreicht. Im Übrigen entspricht die in Figur 5 gezeigte Montageverbindung hinsichtlich ihres Aufbaus und ihrer Montage der in den Figuren 1 und 2 gezeigten Verbindung.

Die Arretierscheibe 18 kann erfindungsgemäß bei Bedarf auch zur axialen Sicherung des Loslagers 16 (Innenring) eingesetzt werden. Dies ist in Figur 3 an Position 60 dargestellt. Die Anzahl der eingesetzten Hohlschrauben 20, 20' ist abhängig von dem Belastungszustand im Montagefall.

Grundsätzlich ist es auch denkbar, die Arretierscheibe 18 mittels Schrauben zu verbinden, deren Kopf in der Arretierscheibe 18 versenkt wird (keine Hohlschrauben). Die Befestigung der Rotornabe 12 erfolgt dann über einen zweiten inneren Lochkreis. Die Nabe selbst besitzt dann nur einen Lochkreis.

## Patentansprüche

1. Verfahren zur Montage einer Rotornabe an einer Rotorwelle einer Windenergieanlage, bei dem nacheinander folgende Schritte ausgeführt werden:
- an dem der Rotornabe (12) zugewandten Ende der Rotorwelle (10) wird eine Arretierscheibe (18) an der Rotorwelle (10) befestigt, die eine Vielzahl von Bohrungen zur vorläufigen Befestigung der Rotornabe (12) aufweist,
- die Rotornabe (12) wird zur Montage in Anlage mit der Arretierscheibe (18) gebracht,
- sofern erforderlich, werden die Bohrungen in der Arretierscheibe (18) durch Verdrehen der Rotorwelle (10) und/oder der Rotornabe (12) in Überlappung mit entsprechenden Bohrungen in der Rotornabe (12) gebracht,
- die Rotornabe (12) wird durch die Bohrungen der Arretierscheibe (18) und der Rotornabe (12) von der Rotorwellenseite her vorläufig mit der Arretierscheibe (18) verschraubt, und
- die Rotornabe (12) wird von dem Rotornabeninnenraum (42) her endgültig mit der Arretierscheibe (18) und der Rotorwelle (10) verschraubt.

2. Verfahren nach Anspruch 1, **dadurch gekennzeichnet, dass** die Arretierscheibe (18) mittels Hohlschrauben (20, 20') mit der Rotorwelle (10) verschraubt wird.

3. Verfahren nach einem der Ansprüche 1 oder 2, **dadurch gekennzeichnet, dass** das endgültige Verschrauben der Rotornabe (12) mit der Arretierscheibe (18) und der Rotorwelle (10) mit durch die Hohlschrauben (20) gesteckten und in entsprechende Gewinde der Rotorwelle (10) eingeschraubten Stiftschrauben (44) erfolgt.

4. Verfahren nach Anspruch 2, **dadurch gekennzeichnet, dass** die Hohlschrauben (20') ein Innengewinde aufweisen, und dass das endgültige Verschrauben der Rotornabe (12) mit der Arretierscheibe (18) und der Rotorwelle (10) durch in das Innengewinde der Hohlschrauben (20') geschraubte Stiftschrauben (44) erfolgt.

5. Verfahren nach einem der vorhergehenden Ansprüche, **dadurch gekennzeichnet, dass** die Arretierscheibe (18) in ihrem Außenbereich einen Befestigungsflansch (28) zur Befestigung mit einem entsprechenden Flansch (30) der Rotornabe (12) aufweist.

6. Verfahren nach einem der vorhergehenden Ansprüche, **dadurch gekennzeichnet, dass** die Bohrungen der Arretierscheibe (18) zur vorläufigen Befestigung der Rotornabe (12) in dem Befestigungsflansch (28) angeordnet sind.

7. Verfahren nach Anspruch 5 oder 6, **dadurch gekennzeichnet, dass** der Befestigungsflansch (28) über Aussteifungsrippen (34) mit einem konzentrisch zu dem Befestigungsflansch (28) vorgesehenen inneren Befestigungsflansch (38) mit einer Vielzahl Bohrungen zum endgültigen Verschrauben der Rotornabe (12) mit der Arretierscheibe (18) und der Rotorwelle (10) verbunden ist.

8. Windenergieanlage mit einer Rotorwelle und einer an der Rotorwelle befestigten Rotornabe, **dadurch gekennzeichnet,**
- **dass** zwischen der Rotorwelle (10) und der Rotornabe (12) eine Arretierscheibe (18) mit einer Vielzahl von Bohrungen zur vorläufigen Befestigung der Rotornabe (12) angeordnet ist,
- **dass** die Arretierscheibe (18) mit der Rotornabe (12) von der Rotorwellenseite her durch die Bohrungen der Arretierscheibe (18) und entsprechende Bohrungen der Rotornabe (12) verschraubt ist, und
- **dass** die Rotornabe (12) außerdem von dem Rotornabeninnenraum (42) her mit der Arretierscheibe (18) und der Rotorwelle endgültig verschraubt ist.

9. Windenergieanlage nach Anspruch 8, **dadurch gekennzeichnet, dass** die Arretierscheibe (18) mittels Hohlschrauben (20, 20') mit der Rotorwelle (10) verschraubt ist.

10. Windenergieanlage nach Anspruch 9, **dadurch gekennzeichnet, dass** die Rotornabe (12) mit der Arretierscheibe (18) und der Rotorwelle (10) mit durch die Hohlschrauben (20) gesteckten und in entsprechende Gewinde der Rotorwelle (10) eingeschraubten Stiftschrauben (44) verschraubt ist.

11. Windenergieanlage nach Anspruch 9, **dadurch gekennzeichnet, dass** die Hohlschrauben (20') ein Innengewinde aufweisen, und dass die Rotornabe (12) mit der Arretierscheibe (18) und der Rotorwelle (10) durch in das Innengewinde der Hohlschrauben (20') geschraubte Stiftschrauben (44) verschraubt ist.

12. Windenergieanlage nach einem der Ansprüche 8 bis 11, **dadurch gekennzeichnet, dass** die Arretierscheibe (18) in ihrem Außenbereich einen Befestigungsflansch (28) zur Befestigung mit einem entsprechenden Flansch (30) der Rotornabe (12) aufweist.

13. Windenergieanlage nach einem der Ansprüche 8 bis 12, **dadurch gekennzeichnet, dass** die Bohrungen der Arretierscheibe (18) zur vorläufigen Befestigung der Rotornabe (12) in dem Befestigungsflansch (28) angeordnet sind.

14. Windenergieanlage nach Anspruch 12 oder 13, **dadurch gekennzeichnet, dass** der Befestigungsflansch (28) über Aussteifungsrippen (34) mit einem konzentrisch zu dem Befestigungsflansch (28) vorgesehenen inneren Befestigungsflansch (38) mit einer Vielzahl Bohrungen zum Verschrauben der Rotornabe (12) mit der Arretierscheibe (18) und der Rotorwelle (10) verbunden ist.

## Claims

1. A method for assembling a rotor hub on a rotor shaft of a wind turbine, in which the following steps are performed successively:
- a locking disk (18), which has a plurality of bore holes for preliminary mounting of the rotor hub (12), is fastened to the rotor shaft (10) at the end of the rotor shaft (10) facing the rotor hub (12),
- for assembling, the rotor hub (12) is moved up against the locking disk (18),
- the bore holes in the locking disk (18) are brought into overlapping alignment with the corresponding bore holes in the rotor hub (12) by rotating the rotor shaft (10) and/or the rotor hub (12) if required,
- the rotor hub (12) is preliminarily screwed together from the rotor shaft side with the locking disk (18) through the bore holes of the locking disk (18) and the rotor hub (12) , and
- the rotor hub (12) is finally screwed together from the interior of the rotor hub (42) with the locking disk (18) and the rotor shaft (10).

2. The method according to claim 1, **characterized in that** the locking disk (18) is screwed together with the rotor shaft (10) by means of hollow screws (20, 20').

3. The method according to one of the claims 1 or 2, **characterized in that** the final screwing together of the rotor hub (12) with the locking disk (18) and the rotor shaft (10) happens using studs (44) plugged through the hollow screws (20) and screwed into the corresponding threads of the rotor shaft (10).

4. The method according to claim 2, **characterized in that** the hollow screws (20') have an internal thread, and that the final screwing together of the rotor hub (12) with the locking disk (18) and the rotor shaft (10) happens by using studs (44) screwed into the internal thread of the hollow screws (20').

5. The method according to one of the preceding claims, **characterized in that** the outer area of the locking disk (18) has a mounting flange (28) for mounting to a corresponding flange (30) of the rotor hub (12).

6. The method according to one of the preceding claims, **characterized in that** the bore holes in the locking disk (18) for preliminary mounting of the rotor hub (12) are arranged in the mounting flange (28).

7. The method according to claim 5 or 6, **characterized in that** the mounting flange (28) is connected via stiffening ribs (34) to an inner mounting flange (38), provided concentrically to the mounting flange (28), with a plurality of bore holes for the final screwing together the rotor hub (12) with the locking disk (18) and the rotor shaft (10).

8. A wind turbine with a rotor shaft and a rotor hub mounted to the rotor shaft, **characterized in that**
- a locking disk (18) with a plurality of bore holes for preliminary mounting of the rotor hub (12), is arranged between the rotor shaft (10) and the rotor hub (12),
- that the locking disk (18) is screwed together with the rotor hub (12) from the rotor shaft side through the bore holes of the locking disk (18) and corresponding bore holes of the rotor hub (12), and
- that in addition, the rotor hub (12) is finally srewed together from the interior of the rotor hub (42) with the locking disk (18) and the rotor shaft.

9. The wind turbine according to claim 8, **characterized in that** the locking disk (18) is screwed together with the rotor shaft (10) by means of hollow screws (20, 20').

10. The wind turbine according to claim 9, **characterized in that** the rotor hub (12) is screwed together with the locking disk (18) and the rotor shaft (10) using studs (44) plugged through the hollow screws (20) and screwed into corresponding threads of the rotor shaft (10).

11. The wind turbine according to claim 9, **characterized in that** the hollow screws (20') have an internal thread, and that the rotor hub (12) is screwed together with the locking disk (18) and the rotor shaft (10) by using studs (44) screwed into the internal thread of the hollow screws (20').

12. The wind turbine according to one of the claims 8 to 1 **characterized in that** the outer area of the locking disk (18) has a mounting flange (28) for mounting to a corresponding flange (30) of the rotor hub (12).

13. The wind turbine according to one of the claims 8 to 12, **characterized in that** the bore holes in the locking disk (18) for preliminary mounting of the rotor hub (12) are arranged in the mounting flange (28).

14. The wind turbine according to claim 12 or 13, **characterized in that** the mounting flange (28) is connected via stiffening ribs (34) to an inner mounting flange (38), provided concentrically to the mounting flange (28), with a plurality of bore holes for the screwing together the rotor hub (12) to the locking disk (18) and the rotor shaft (10).

## Revendications

1. Procédé de montage d'un moyeu d'hélice sur un arbre de rotor d'une éolienne, dans lequel les étapes suivantes successives sont exécutées :
- à l'extrémité de l'arbre de rotor (10) dirigée vers le moyeu d'hélice (12), un disque d'arrêt (18) est fixé sur l'arbre de rotor (10), lequel disque comporte une pluralité de perçages en vue de la fixation provisoire du moyeu d'hélice (12),
- le moyeu d'hélice (12) est amené en vue du montage en appui avec le disque d'arrêt (18),
- si requis, les perçages du disque d'arrêt (18) sont amenés par la rotation de l'arbre de rotor (10) et/ou du moyeu d'hélice (12) à chevaucher des perçages correspondants du moyeu d'hélice (12),
- le moyeu d'hélice (12) est vissé provisoirement au disque d'arrêt (18) à travers les perçages du disque d'arrêt (18) et du moyeu d'hélice (12) depuis le côté de l'arbre de rotor, et
- le moyeu d'hélice (12) est vissé définitivement au disque d'arrêt (18) et à l'arbre de rotor (10) depuis l'espace intérieur du moyeu d'hélice (42).

2. Procédé selon la revendication 1, **caractérisé en ce que** le disque d'arrêt (18) est vissé au moyen de vis creuses (20, 20') à l'arbre de rotor (10).

3. Procédé selon une des revendications 1 ou 2, **caractérisé en ce que** le vissage définitive du moyeu d'hélice (12) au disque d'arrêt (18) et à l'arbre de rotor (10) est effectué par des goujons (44) enfilés à travers les vis creuses (20) et vissés dans le filet correspondant de l'arbre de rotor (10).

4. Procédé selon la revendication 2, **caractérisé en ce que** les vis creuses (20') comportent un filet intérieur, et **en ce que** le vissage définitive du moyeu d'hélice (12) au disque d'arrêt (18) et à l'arbre de rotor (10) est effectué par des goujons (44) vissés dans le filet intérieur des vis creuses (20').

5. Procédé selon une des revendications précédentes, **caractérisé en ce que** le disque d'arrêt (18) comporte dans sa zone extérieur un flanc de fixation (28) destinée à la fixation à un flanc correspondant (30) du moyeu d'hélice (12).

6. Procédé selon une des revendications précédentes, **caractérisé en ce que** les perçages du disque d'arrêt (18) en vue de la fixation provisoire du moyeu d'hélice (12) sont arrangés dans le flanc de fixation (28).

7. Procédé selon la revendication 5 ou 6, **caractérisé en ce que** le flanc de fixation (28) est joindrée, via des nervures de renforcement (34) avec un flanc de fixation (38) intérieur concentrique à le flanc de fixation (28) et avec une pluralité de perçages en vue du vissage définitive du moyeu d'hélice (12) au disque d'arrêt (18) et à l'arbre de rotor (10).

8. Eolienne munie d'un arbre de rotor et d'un moyeu d'hélice fixé sur l'arbre de rotor, **caractérisée en ce que**
un disque d'arrêt (18) comportant une pluralité de perçages en vue de la fixation provisoire du moyeu d'hélice (12) est arrangé entre l'arbre de rotor (10) et le moyeu d'hélice (12),
le disque d'arrêt (18) avec le moyeu d'hélice (12) depuis le côté de l'arbre de rotor est vissé à travers les perçages du disque d'arrêt (18) et des perçages correspondants du moyeu d'hélice (12), et
le moyeu d'hélice (12) est vissé en outre définitivement depuis l'espace intérieur du moyeu d'hélice (42) au disque d'arrêt (18) et à l'arbre de rotor.

9. Eolienne selon la revendication 8, **caractérisée en ce que** le disque d'arrêt (18) est vissé au moyen de vis creuses (20, 20') à l'arbre de rotor (10).

10. Eolienne selon la revendication 9, **caractérisée en ce que** le moyeu d'hélice (12) avec le disque d'arrêt (18) et l'arbre de rotor (10) est vissé aux goujons (44) enfilés à travers les vis creuses (20) et vissés dans le filet correspondant de l'arbre de rotor (10).

11. Eolienne selon la revendication 9, **caractérisée en ce que** les vis creuses (20') comportent un filet intérieur, et **en ce que** le moyeu d'hélice (12) avec le disque d'arrêt (18) et l'arbre de rotor (10) est vissé par des goujons (44) vissés dans le filet intérieur des vis creuses (20').

12. Eolienne selon une des revendications 8 à 11, **caractérisée en ce que** le disque d'arrêt (18) comporte dans sa zone extérieur un flanc de fixation (28) destinée à la fixation à un flanc correspondant (30) du moyeu d'hélice (12).

13. Eolienne selon une des revendications 8 à 12, **caractérisée en ce que** les perçages du disque d'arrêt en vue de la fixation provisoire du moyeu d'hélice (12) (18) sont arrangés dans le flanc de fixation (28).

14. Eolienne selon la revendication 12 ou 13, **caractérisée en ce que** le flanc de fixation (28) est joindrée, via des nervures de renforcement (34) avec un flanc de fixation (38) intérieur concentrique à le flanc de fixation (28) et avec une pluralité de perçages en vue du vissage du moyeu d'hélice (12) au disque d'arrêt (18) et à l'arbre de rotor (10).
